# DEMANDE DE BREVET EUROPEEN

(11) **EP 1 235 377 A2**
(43) Date de publication de la demande: **28.08.2002**
(21) Numéro de dépôt: 02290297.7
(22) Date de dépôt: 07.02.2002
(51) Int. Cl.: H04J 14/02, H04Q 11/00

(54) **Dispositif d'extraction de frequence**

(30) Priorité: 23.02.2001 FR 0102502
(71) Demandeur: ALCATEL, 75008 Paris (FR)
(72) Inventeur: Khalfallah, Sabry, 75005 Paris (FR); Penninckx, Denis, 91620 Nozay (FR)
(74) Mandataire: Fournier, Michel Robert Marie

(57) **Abrégé**

L'invention concerne un dispositif d'extraction sélective de fréquence pour transmettre une ou plusieurs fréquences sélectionnées d'un signal d'entrée de type multiplex à répartition de fréquence constitué de N canaux sur un port de sortie (O1) et toutes les autres fréquences sur un autre port de sortie (02). L'invention concerne également un dispositif de multiplexage à insertion et extraction de fréquences reconfigurable.

Le signal d'entrée est fractionné par un premier démultiplexeur (Demux') à destination d'une pluralité d'étages entrelacés d'interrupteurs optiques (C, A, B) qui permettent d'alimenter sélectivement plusieurs ports d'entrée (M1, ..., M9) d'un multiplexeur (Mux'), lequel va alors utiliser ses propriétés de routage pour mettre en oeuvre l'extraction d'une ou plusieurs fréquences du signal d'entrée, ou le multiplexage à insertion et extraction de fréquence reconfigurable.

## Description

L'invention concerne les systèmes de transmission à fibre optique à multiplexage en fréquence, et plus précisément, l'invention concerne un dispositif permettant d'extraire une fréquence sélectionnée d'un signal de type multiplex à répartition de fréquence comprenant N fréquences, ainsi qu'un dispositif de commutation de fréquence et de multiplexage à insertion et extraction de fréquence reconfigurable.

L'invention se situe donc dans le contexte des architectures de commutation optique.

Au niveau des noeuds de commutation optique, arrivent des fréquences identiques transportant des informations différentes, lesquelles sont prévues pour des destinations différentes. Il est nécessaire d'orienter ces informations vers leurs destinations respectives au niveau du noeud de commutation.

Pour ce faire, les commutateurs optiques doivent mettre en oeuvre des moyens pour assurer l'insertion et l'extraction des canaux optiques.

De nombreux multiplexeurs à insertion extraction ou dispositifs de commutation de ce type sont déjà connus dans l'art antérieur.

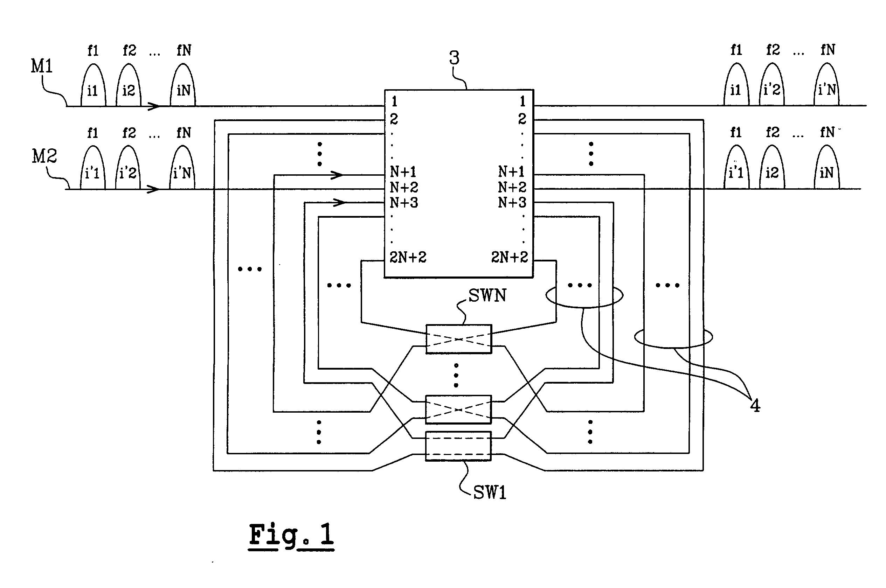

Notamment, la figure 1 illustre de façon schématique un tel dispositif pour le multiplexage à N canaux. Ce dispositif est décrit dans un article intitulé « Integrated Multichannel Optical Wavelength Selective Switches Incorporating and Arrayed-Waveguide Grating Multiplexer and Thermooptic Switches », paru en avril 1998 dans la publication J. of Ligthwave Technol., vol. 16, no. 4, pp. 650-655.

Le dispositif montré à la figure 1 comprend un réseau à guides d'onde 3 de type AWG, acronyme pour l'expression anglo-saxonne « Arrayed Waveguide Grating ». Ce réseau à guides d'onde 3 est doté de 2N+2 ports d'entrée référencés de 1 à 2N+2 sur la figure et 2N+2 ports de sortie également référencés de 1 à 2N+2. Un réseau de N commutateurs optiques 2x2 SW₁ à SW_{N} permet de connecter entre eux les différents ports d'entrée et de sortie du réseau à guides d'onde 3 par l'intermédiaire de lignes de rebouclage 4.

Sur un premier multiplex d'entrée M1, des informations i1, i2,..., iN sont codées respectivement sur les fréquences f1, f2,..., fN et sur un deuxième multiplex d'entrée M2, des informations i'1, i'2,..., i'N sont codées respectivement sur les fréquences f1, f2,..., fN.

Ainsi, les mêmes fréquences f1 à fN véhiculent des informations différentes. Le dispositif cherche alors à extraire une information codée sur une certaine fréquence et à insérer ensuite une autre information sur cette même fréquence.

Typiquement, dans l'exemple de la figure 1, on veut récupérer l'information i2 codée sur la fréquence f2 et l'information iN codée sur la fréquence fN et coder à la place sur ces mêmes fréquences les informations i'2 et i'N.

Le principe de fonctionnement pour cet exemple particulier est basé sur le fait que les fréquences du premier multiplex qui entrent sur le port d'entrée 1 vont se trouver démultiplexées sur les ports de sortie N+3 à 2N+2 et toutes les fréquences du second multiplex qui entrent sur le port N+2 sont démultiplexées vers les ports de sortie 2 à N+1.

Puis, les signaux ainsi démultiplexés sont guidés vers les N commutateurs optiques 2x2 SW₁ à SW_{N}. Les signaux avec la même fréquence fi issus respectivement des deux multiplex d'entrée M1 et M2 sont envoyés vers le même commutateur 2x2 Swi. Les signaux de sortie commutés par les N commutateurs 2x2 sont alors rebouclés vers les ports d'entrée du réseau à guides d'onde 3.

Les signaux rebouclés vers les ports d'entrée N+3 à 2N+2 d'une part, et les ports d'entrée 2 à N+1 d'autre part, sont automatiquement remultiplexés et envoyés vers deux ports de sortie du réseau à guides d'onde : les ports de sortie 1 et N+2 respectivement.

Chaque commutateur Swi permet, pour une certaine fréquence fi, d'envoyer le signal codé sur cette fréquence fi soit vers le premier ensemble de ports d'entrée 2 à N+1 et plus précisément vers le port d'entrée i+1, soit vers le deuxième ensemble de ports d'entrée N+3 à 2N+2 et plus précisémment vers le port d'entrée i+N+2. Chaque commutateur SWi permet donc en fait de changer le port de sortie numéroté 1 ou N+2, sur lequel l'information codée à la fréquence fi va être envoyée.

De plus, dans le cas où un seul port d'entrée est utilisé, le dispositif met simplement en oeuvre une fonction d'extraction de fréquence puisque chaque fréquence composant le multiplex d'entrée peut être envoyée indépendamment sur l'un des deux ports de sortie 1 ou N+2 suivant la configuration adoptée pour les commutateurs.

Cependant, l'élément de routage mis en oeuvre dans le dispositif de la figure 1, à savoir le réseau à guides d'onde de type AWG, n'est absolument pas optimisé en nombre de canaux. En effet, pour pouvoir traiter N canaux avec une telle architecture, il faut un élément de routage capable de router 2N+2 canaux. Le réseau à guides d'onde est donc surdimensionné puisqu'il doit comporter 2N+2 ports d'entrée et 2N+2 ports de sortie pour traiter N fréquences.

Par conséquent, cela revient approximativement à doubler le nombre de guides d'onde dans le réseau, rendant ainsi le dispositif complexe et coûteux.

Un autre inconvénient de cette solution est que le dispositif est basé sur l'utilisation de commutateurs optiques 2x2.

Dans le cas où les commutateurs mis en oeuvre sont de type thermo-optiques, la vitesse de fonctionnement du dispositif est limitée. En effet, avec des commutateurs de ce type, le dispositif est incapable d'assurer la sélection des informations codées en fréquence en moins de quelques nano-secondes.

Pour un fonctionnement plus rapide, des commutateurs à base d'amplificateurs optiques peuvent néanmoins être utilisés. Cependant, pour réaliser un commutateur 2x2 à base d'amplificateurs optiques, il est nécessaire de mettre en oeuvre quatre éléments actifs contre deux seulement pour un commutateur thermo-optique. Ainsi, dans l'exemple de la figure 1, dans le cas où une solution rapide est mise en oeuvre à base d'amplificateurs optiques, il faut prévoir 4N éléments actifs, ce qui est pénalisant en terme de consommation.

Donc, quelle que soit la technologie employée, l'utilisation de commutateurs optiques 2x2 dans de tels dispositifs ne donne pas satisfaction.

Aussi, le but que se propose d'atteindre la présente invention est de prévoir un dispositif compact et rapide capable d'extraire sélectivement une ou plusieurs fréquences d'un signal d'entrée de type multiplex à répartition de fréquence, c'est-à-dire qui soit capable de transmettre toutes les fréquences d'entrée à l'exception d'au moins une fréquence sur le même port de sortie et la ou les fréquences sélectionnées sur un autre port de sortie.

L'invention se propose également, en partant de l'architecture du dispositif d'extraction, de l'étendre à des fonctions plus complexes et notamment, de prévoir un fonctionnement de type multiplexage à insertion et extraction de fréquences reconfigurable qui pallie les inconvénients de l'art antérieur précité.

A cet effet, l'invention prévoit de tirer avantage des propriétés de routage des multiplexeurs en réseau à guides d'onde pour étendre l'architecture d'un sélecteur de longueur d'onde conventionnel à une architecture comprenant plusieurs étages d'interrupteurs optiques entrelacés.

Le spectre optique entrant de type multiplex à répartition de fréquence est ainsi fractionné par un premier démultiplexeur à destination d'une pluralité d'étages entrelacés d'interrupteurs optiques qui permettent d'alimenter sélectivement plusieurs ports d'entrée d'un multiplexeur, lequel va alors utiliser ses propriétés de routage pour mettre en oeuvre les fonctions complexes exposées plus haut, à savoir l'extraction d'une ou plusieurs fréquences du multiplex d'entrée, le multiplexage à insertion et extraction de fréquence reconfigurable ou encore la commutation de fréquence reconfigurable.

L'invention concerne donc un dispositif d'extraction sélective de fréquence pour transmettre une ou plusieurs fréquences sélectionnées d'un signal d'entrée de type multiplex à répartition de fréquence constitué de N canaux sur un port de sortie du dispositif et toutes les autres fréquences sur un autre port de sortie du dispositif, caractérisé en ce qu'il comprend :
- un démultiplexeur ayant au moins un port d'entrée et au moins N ports de sortie, et quel que soit i compris entre 1 et N, le port de sortie de rang i dudit démultiplexeur est prévu pour recevoir la fréquence correspondante de rang i dudit signal d'entrée,
- un multiplexeur ayant au moins N+1 ports d'entrée et au moins deux ports de sortie, quel que soit i compris entre 1 et N, le port d'entrée de rang i dudit multiplexeur est prévu pour adresser la fréquence de rang i dudit signal d'entrée au premier port de sortie dudit multiplexeur et quel que soit i compris entre 2 et N+1, le port d'entrée de rang i dudit multiplexeur est prévu pour adresser la fréquence de rang i-1 dudit signal d'entrée au second port de sortie dudit multiplexeur, et
- des moyens de commutation optique pour connecter de façon sélective n'importe quel port de sortie de rang i dudit démultiplexeur, i étant compris entre 1 et N, soit au port d'entrée de rang i dudit multiplexeur, soit au port d'entrée de rang i+1 dudit multiplexeur.

L'invention concerne aussi un de multiplexage à insertion et extraction de fréquences reconfigurable caractérisé en ce qu'il comprend :
- un démultiplexeur ayant au moins deux ports d'entrée pour recevoir deux multiplex à répartition de fréquence constitué de N canaux et au moins N+2 ports de sortie, quel que soit i compris entre 1 et N, le port de sortie de rang i dudit démultiplexeur est prévu pour recevoir la fréquence correspondante de rang i du premier multiplex reçu sur le premier port d'entrée et quel que soit i compris entre 3 et N+2, le port de sortie rang i dudit démultiplexeur est prévu pour recevoir la fréquence de rang i-2 du second multiplex reçu sur le second port d'entrée,
- un multiplexeur ayant au moins N+1 ports d'entrée et au moins deux ports de sortie, quel que soit i compris entre 1 et N, le port d'entrée de rang i dudit multiplexeur est prévu pour adresser la fréquence de rang i dudit signal d'entrée au premier port de sortie dudit multiplexeur et quel que soit i compris entre 2 et N+1, le port d'entrée de rang i dudit multiplexeur est prévu pour adresser la fréquence de rang i-1 dudit signal d'entrée au second port de sortie dudit multiplexeur,
- des moyens de commutation optique pour connecter de façon sélective n'importe quel port de sortie de rang i dudit démultiplexeur, avec i compris entre 3 et N, soit au port d'entrée de rang i-1 dudit multiplexeur, soit au port d'entrée de rang i dudit multiplexeur, soit au port d'entrée de rang i+1 dudit multiplexeur, les ports de sortie de rang 1 et de rang 2 dudit démultiplexeur étant connectés chacun respectivement aux ports d'entrée de rang 1 et de rang 2 et aux ports d'entrée de rang 2 et de rang 3 dudit multiplexeur et les ports de sortie de rang N+1 et N+2 dudit démultiplexeur étant connectés chacun respectivement aux ports d'entrée de rang N et au port d'entrée de rang N+1 dudit multiplex Mux.

D'autres caractéristiques et avantages de l'invention seront mieux comprises à la lecture de la description suivante d'un exemple de réalisation en référence aux figures dans lesquelles :
- la figure 1 est un schéma illustrant un dispositif multiplexeur à insertion et extraction de fréquences selon l'art antérieur et a déjà été décrite ci-dessus ;
- la figure 2 est un schéma illustrant un dispositif d'extraction sélective de fréquence selon la présente invention ;
- la figure 3 est un schéma illustrant le principe de fonctionnement du dispositif de multiplexage à insertion et extraction de fréquences reconfigurable selon la présente invention.

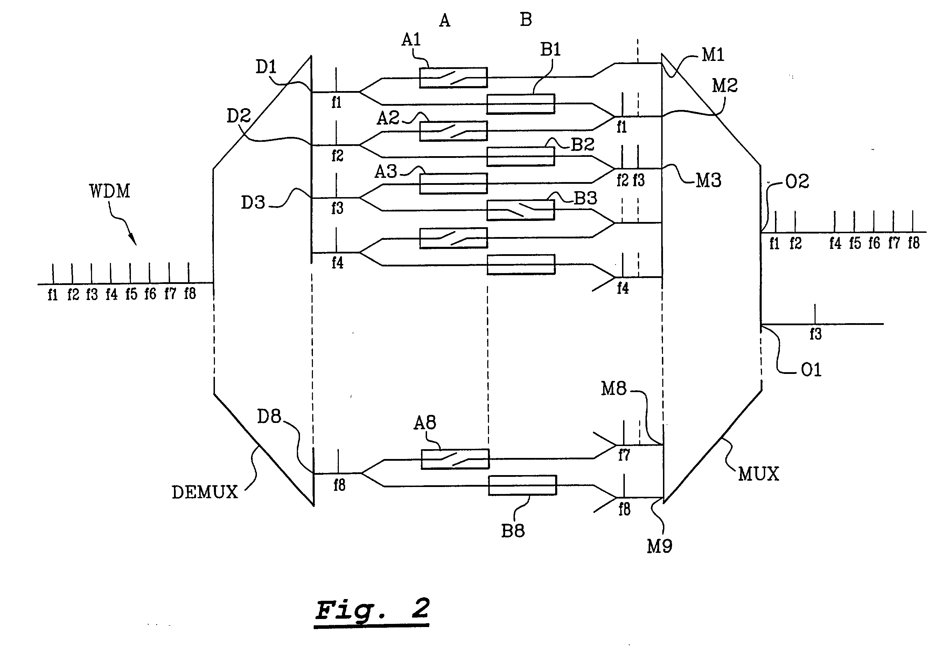

La figure 2 présente donc un exemple de fonctionnement du dispositif d'extraction selon l'invention.

Le dispositif montré à la figure 2 comprend un démultiplexeur 1x8 Demux et un multiplexeur 9x2 Mux utilisé en tant que routeur.

De façon avantageuse, le démultiplexeur Demux ainsi que le multiplexeur Mux peuvent être de type réseau à guides d'onde.

Les ports de sortie du démultiplexeur Demux, respectivement D1, D2,..., D8 sont connectés aux ports d'entrée M1 à M9 du multiplexeur-routeur Mux par l'intermédiaire de deux étages entrelacés de commutation optique A et B.

Le premier étage A de commutation optique comprend huit interrupteurs optiques A1 à A8 et le deuxième étage B comprend lui aussi huit interrupteurs optiques B1 à B8. Ces interrupteurs optiques peuvent par exemple être des amplificateurs optiques.

Un spectre optique de type multiplex à répartition de fréquence comprenant huit canaux f1 à f8 est démultiplexé par le démultiplexeur 1x8 Demux. Les fréquences f1 à f8 se retrouvent donc chacune respectivement sur les huit ports de sortie D1 à D8 du démultiplexeur Demux.

Chacun des ports de sortie du démultiplexeur Demux est divisé en deux bras qui adressent chacun l'un des deux étages de commutation optique A et B. Les deux bras de chacun des ports de sortie D1 à D8 du démultiplexeur Demux ne sont pas recombinés vers un même port d'entrée du multiplexeur routeur Mux mais sont au contraire connectés à des ports d'entrée différents du multiplexeur routeur.

Ainsi, le port de sortie numéro un D1 de Demux est connecté, par l'intermédiaire de deux interrupteurs optiques A1 et B1 appartenant respectivement au premier étage A et au deuxième étage B d'interrupteurs optiques, d'une part, au port d'entrée numéro un M1 du multiplexeur routeur Mux et, d'autre part, au port d'entrée numéro deux M2 du multiplexeur routeur Mux.

De même, le deuxième port de sortie D2 du premier démultiplexeur Demux est connecté, par l'intermédiaire respectivement des interrupteurs optiques A2 et B2 d'une part, au port d'entrée numéro deux M2 du multiplexeur routeur et, d'autre part, au port d'entrée numéro trois M3 du multiplexeur routeur.

Et ainsi de suite, jusqu'au port de sortie D8 de Demux qui est connecté, par l'intermédiaire respectivement des interrupteurs optiques A8 et B8, d'une part au port d'entrée numéro huit M8 du multiplexeur routeur et, d'autre part, au port d'entrée numéro 9 M9 du multiplexeur routeur.

Les fréquences démultiplexées sont donc divisées puis transmises ou éliminées à travers les deux étages de commutation optique A et B et adressés sélectivement aux ports d'entrée consécutifs M1 à M9 du multiplexeur Mux.

Selon une propriété de routage particulière du multiplexeur routeur Mux, en considérant toutes les fréquences qui rentrent dans le multiplexeur routeur Mux avec la même configuration qu'en sortie du démultiplexeur Demux, c'est-à-dire la fréquence f1 adressée au port d'entrée M1 du multiplexeur, la fréquence f2 adressée au port d'entrée M2 du multiplexeur etc..., ces fréquences se retrouvent multiplexées sur le port de sortie central O1 du multiplexeur routeur Mux.

Par contre, en considérant les fréquences qui se trouvent décalées d'un port vers le bas à l'entrée du multiplexeur routeur Mux, c'est-à-dire la fréquence f1 adressée au port d'entrée numéro deux M2, la fréquence f2 adressée au port d'entrée numéro trois M3, ces fréquences se trouvent multiplexées un port de sortie plus haut, soit le port de sortie O2 du multiplexeur routeur Mux.

Sur l'exemple de la figure 2, dans l'étage de commutation optique A seul l'interrupteur A3 est fermé tandis que tous les autres A1, A2 et A4 à A8 sont ouverts.

Dans l'étage de commutation optique B, une configuration complémentaire à celle de l'étage A est mise en oeuvre, à savoir seul l'interrupteur B3 est ouvert et tous les autres B1, B2 et B4 à B8 sont fermés.

Les lignes en pointillés représentent les fréquences qui ont été éliminées.

Ainsi, dans la configuration particulière des interrupteurs optiques exposée ci-dessus, la fréquence f3 est extraite du spectre d'entrée constituée des fréquences f1 à f8.

En conséquence, toutes les fréquences du spectre d'entrée, à l'exception de la fréquence f3, sont transmises sur le même port de sortie O2 du dispositif, tandis que la fréquence extraite f3 est transmise sur l'autre port de sortie O1 du dispositif.

Il est également possible d'extraire plusieurs canaux du multiplex d'entrée pour les envoyer sur un même port de sortie en activant plusieurs interrupteurs optiques de l'étage A et en activant alors les interrupteurs optiques de l'étage B de façon complémentaire.

Ce résultat est obtenu grâce au principe de connexion particulier entre les ports de sortie D1 à D8 du premier démultiplexeur Demux et les interrupteurs de chacun des deux étages de commutation optique A et B, ainsi qu'aux propriétés de routage du multiplexeur routeur Mux.

En généralisant, soit N le nombre de canaux constituant le spectre d'entrée du dispositif. (N est pris égal à 8 dans l'exemple de la figure 2)

Le démultiplexeur à l'entrée du dispositif est un démultiplexeur 1xN comprenant au moins un port d'entrée et au moins N port de sortie et le multiplexeur routeur disposé en sortie du dispositif est un multiplexeur (N+1)x2 comprenant au moins N+1 port d'entrée et au moins 2 ports de sorties.

Pour n'importe quel i compris entre 1 et N, le port de sortie de rang i Di du démultiplexeur Demux est prévu pour recevoir la fréquence correspondante de rang i du spectre d'entrée démultiplexé.

Pour n'importe quel i compris entre 1 et N, le port d'entrée de rang i Mi du multiplexeur Mux est prévu pour adresser la fréquence de rang i fi du multiplex d'entrée à un premier port de sortie O1, et pour n'importe quel i compris entre 2 et N+1, le port d'entrée de rang i Mi du multiplexeur Mux est prévu pour adresser la fréquence de rang i-1 fi-1 à un second port de sortie O2.

Des moyens de commutation optique, constitués des interrupteurs optiques Ai et Bi, permettent de connecter de façon sélective n'importe quel port de sortie de rang i Di du démultiplexeur Demux, avec i compris entre 1 et N, soit à un port d'entrée de rang i Mi du multiplexeur Mux, soit à un port d'entrée de rang i+1 Mi+1 du multiplexeur Mux.

En effet, le port de sortie i Di de Demux est connecté d'une part, à l'interrupteur optique Ai du premier étage de commutation optique A et, d'autre part, à l'interrupteur optique Bi du second étage de commutation optique B. Les interrupteurs optiques Ai et Bi-1 sont tous deux connectés au même port d'entrée de rang i Mi du multiplexeur routeur Mux, l'interrupteur optique Bi étant alors connecté au port d'entrée de rang i+1 Mi+1 du multiplexeur routeur Mux.

Les deux étages de commutation optique A et B sont configurés de façon complémentaire.

Ainsi, pour i et j compris entre 1 et N, le ou les interrupteurs optiques Ai sont fermés tandis que les interrupteurs optiques Aj≠i sont ouverts, et le ou les interrupteurs optiques Bi sont alors ouverts tandis que les interrupteurs optiques Bj≠i sont fermés.

Dans cette configuration, la ou les fréquences de rang i fi sont extraites et envoyées sur le premier port de sortie central O1 du dispositif. Quant aux autres fréquences de rang j fj≠i, elles sont multiplexées sur un autre port de sortie O2 du dispositif d'extraction sélective de fréquence.

Le dispositif d'extraction selon la présente invention ne nécessite aucun surdimensionnement.

En effet, pour un multiplex d'entrée constitué de N fréquences, le démultiplexeur d'entrée Demux est de type 1xN et n'est donc pas surdimensionné, tandis que le multiplexeur routeur Mux de type (N+1)x1 n'est surdimensionné que d'un seul canal.

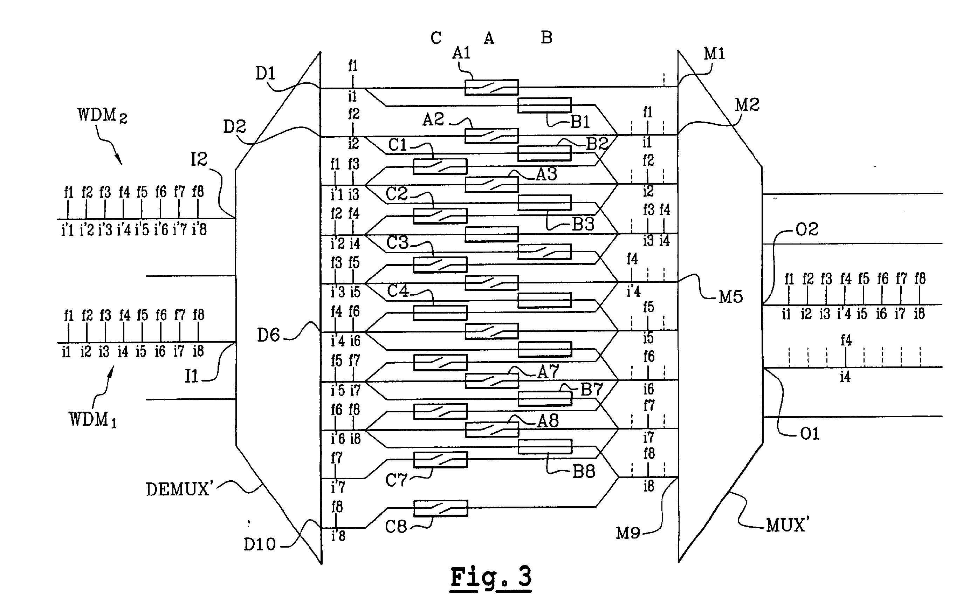

L'architecture précédente en référence à la figure 2 peut être adaptée de façon à pouvoir mettre en oeuvre des opérations plus complexes, notamment le multiplexage à insertion et extraction de fréquences reconfigurable. Cette adaptation est illustrée à la figure 3.

Le principe de fonctionnement du dispositif montré à la figure 3 est le même que celui du dispositif d'extraction sélective de fréquence selon la figure 2.

L'explication suivante est basée sur des signaux d'entrée de type multiplex à répartition de fréquence constitué de N canaux. Dans l'exemple de la figure 3, N est pris égal à 8.

Le dispositif comprend un premier démultiplexeur Demux' ayant au moins deux ports d'entrée I1 et I2 et au moins N+2 ports de sortie ainsi qu'un multiplexeur Mux' ayant au moins N+1 ports d'entrée et au moins deux ports de sortie O1 et O2.

Le démultiplexeur Demux' et le multiplexeur Mux' sont tous deux utilisés en tant que routeur. De préférence, le démultiplexeur et le multiplexeur mis en oeuvre sont de type réseau à guides d'onde.

Les ports de sortie du démultiplexeur, respectivement D1 à DN+2 sont connectés aux ports d'entrée M1 à MN+1 du multiplexeur par l'intermédiaire de moyens de commutation optique.

A la différence de l'architecture précédente, les moyens de commutation optique comprennent trois étages entrelacés de commutation optique C, A et B et chaque étage de commutation optique comprend N interrupteurs optiques. Ces interrupteurs optiques peuvent par exemple être réalisés au moyen d'amplificateurs optiques semi-conducteurs.

Un premier multiplex d'entrée à répartition de fréquence WDM1 constitué des fréquences f1 à fN (N=8) est reçu sur le port d'entrée I1 du démultiplexeur Demux'. Un deuxième multiplex WDM2 constitué des fréquences f1 à fN (N=8) est reçu sur le port d'entrée I2 du démultiplexeur Demux'.

Les deux multiplex WDM1 et WDM2 transportent des informations différentes mais qui sont codées sur les mêmes fréquences.

Ainsi, le multiplex WDM1 transporte les informations i1, i2, i3 etc... codées respectivement sur les fréquences f1, f2, f3, etc... et le multiplex WDM2 transporte les informations i'1, i'2, i'3, etc... codées respectivement sur les fréquences f1, f2, f3 etc...

Les multiplex WDM1 et WDM2 sont donc démultiplexés par le démultiplexeur Demux.

Pour i compris entre 1 et N, le port de sortie Di reçoit l'information codée sur la fréquence correspondante fi du premier multiplex WDM1.

Selon une propriété de routage particulière du démultiplexeur Demux', le deuxième multiplex WDM2 étant reçu deux ports d'entrée plus haut par rapport au port d'entrée central I1 du démultiplixeur Demux', il est démultiplexé deux ports de sortie plus bas.

Ainsi, pour i compris entre 3 et N+2, le port de sortie Di reçoit la fréquence fi-2 du second multiplex WDM2 reçu sur le port d'entrée I2.

La plupart des N+2 ports de sortie du démultiplexeur Demux' est divisée en trois bras qui adressent chacun l'un des trois étages d'interrupteurs optiques C, A et B. Les trois bras ne sont pas recombinés ensemble vers un même port d'entrée du multiplexeur Mux' mais sont au contraire connectés à des ports d'entrée différents du multiplexeur Mux'.

Pour i compris entre 3 et N, le port de sortie de rang i Di de Demux' est connecté à l'interrupteur optique Ci-2, à l'interrupteur optique Ai et à l'interrupteur optique Bi.

Les ports de sortie D1 et D2 sont divisés en deux bras et connectés respectivement aux interrupteurs optiques A1 et B1 et aux interrupteurs optiques A2 et B2.

Quant aux ports de sortie DN+1 et DN+2, ils sont simplement connectés aux interrupteurs optiques CN-1 et CN.

Pour i compris entre 2 et N, les interrupteurs optiques Ai, Bi-1 et Ci-1 sont connectés au même port d'entrée Mi du multiplexeur Mux'.

L'interrupteur optique A1 est lui connecté au port d'entrée M1 du multiplexeur et les interrupteurs optiques BN et CN (N=8) sont connectés au port d'entrée MN+1 du multiplexeur.

Ainsi, pour i compris entre 3 et N, les moyens de commutation C, A et B permettent de connecter n'importe quel port de sortie de rang i Di du démultiplexeur Demux', au port d'entrée Mi-1, au port d'entrée Mi ou encore au port d'entrée Mi+1 du multiplexeur Mux'.

Le port de sortie D1 du démultiplexeur est connecté aux ports d'entrée M1 et M2 du multiplexeur par l'intermédiaire des interrupteurs optiques A1 et B1 et le port de sortie D2 est connecté aux ports d'entrée M2 et M3 du démultiplexeur par l'intermédiaire des interrupteurs optiques A2 et B2.

Enfin, le port de sortie DN+1 du démultiplexeur est connecté au port d'entrée MN du multiplexeur par l'intermédiaire de l'interrupteur CN-1 et le port de sortie DN+2 est connecté au port d'entrée MN+1 du multiplexeur par l'intermédiaire de l'interrupteur CN.

Les fréquences démultiplexées issues des deux multiplex d'entrée WDM1 et WDM2 sont donc divisées comme précédemment puis sont transmises ou éliminées à travers les trois étages de commutation optiques C, A et B en fonction de l'activation des différents interrupteurs optiques. Les fréquences sont alors adressées sélectivement aux ports d'entrée consécutifs M1 à MN+1 du multiplexeur Mux'.

Toutes les fréquences ne sont pas représentées au niveau des ports d'entrée et de sortie du multiplexeur Mux' de façon à ne pas surcharger la figure.

Le principe de routage mis en oeuvre par le démultiplexeur Mux' est le même que celui déjà expliqué en référence au schéma de la figure 2.

Les interrupteurs optiques des différents étages C, A et B sont activés de la façon qui suit. Les étages de commutation optiques A et B sont configurés de façon complémentaire. Ainsi, pour i et j compris entre 1 et N, i étant égal à 4 et N égal à 8 dans l'exemple de la figure 3, l'interrupteur Ai est fermé et les interrupteurs Aj≠i sont ouverts tandis que l'interrupteur Bi est ouvert et les interrupteurs Bj≠i sont fermés. L'étage C est quant à lui configuré de la même façon que l'étage A.

Dans cette configuration particulière correspondant à l'exemple de la figure 3, en considérant d'abord le premier multiplex WDM1, l'information i4 codée sur la fréquence f4 est extraite et sort sur le premier port de sortie 01 du multiplexeur Mux' et toutes les autres informations i1, i2, i3, i5, i6, i7 et i8 codées respectivement sur les fréquences f1, f2, f3, f5, f6, f7 et f8 sont envoyées sur le second port de sortie plus haut 02 du multiplexeur.

Considérons maintenant le deuxième multiplex WDM2 reçu simultanément sur le port d'entrée I2 du démultiplexeur Demux'. L'information i'4 codée sur la fréquence f4 est insérée dans le spectre optique de sortie sur le port de sortie O2 du multiplexeur Mux'. En effet, comme l'information i'4 codée sur f4 rentre dans le démultiplexeur deux ports d'entrée plus haut par rapport au port d'entrée central I1, elle est routée deux ports de sortie plus bas au niveau des ports de sortie du démultiplexeur, soit à destination du port de sortie D6.

L'information i'4 codée sur f4 est alors adressée au port d'entrée M5 du multiplexeur par l'intermédiaire de l'activation de l'interrupteur optique C4. Par conséquent, l'information i'4 est routée un port de sortie plus haut par rapport au port de sortie central O1 du multiplexeur et est insérée dans le spectre optique de sortie au niveau du port de sortie O2.

Cette configuration particulière des trois étages de commutation optique permet donc de mettre en oeuvre l'extraction d'une information codée sur une certaine fréquence et l'insertion d'une autre information codée sur la même fréquence en utilisant un port d'entrée unique I1, un port dédié à l'insertion I2, un port de sortie O2 et enfin un port de sortie central dédié à l'extraction O1.

Dans notre exemple, l'information i4 codée sur la fréquence f4 est extraite du signal reçu sur le port d'entrée I1 du dispositif et envoyée sur le port d'extraction O1, tandis qu'une autre information i'4 codée sur la même fréquence f4 reçue sur le port d'insertion I2 est insérée dans le signal reçu sur le port de sortie O2 du dispositif.

Le dispositif de multiplexage à insertion et extraction de fréquences selon la présente invention est reconfigurable et permet un fonctionnement très rapide. En effet, l'utilisation d'interrupteurs optiques de type amplificateurs optiques permet de modifier la configuration de routage en moins de 5 nanosecondes.

De plus, les réseaux à guides d'onde utilisés ne sont pas surdimmensionnés, il sont donc moins complexes et procurent un gain en taille important pour le dispositif selon l'invention par rapport aux solutions de l'art antérieur.

Enfin, le dispositif selon l'invention nécessite simplement un unique port d'insertion et un unique port d'extraction au lieu de prévoir autant de ports d'insertion et d'extraction qu'il y a de fréquences devant être insérées ou extraites.

## Revendications

1. Dispositif d'extraction sélective de fréquence pour transmettre une ou plusieurs fréquences sélectionnées d'un signal d'entrée de type multiplex à répartition de fréquence (WDM) constitué de N canaux sur un port de sortie (O1) du dispositif et toutes les autres fréquences sur un autre port de sortie (O2), **caractérisé en ce qu'**il comprend :
- un démultiplexeur (Demux) ayant au moins un port d'entrée et au moins N ports de sortie, et quel que soit i compris entre 1 et N, le port de sortie de rang i (Di) dudit démultiplexeur (Demux) est prévu pour recevoir la fréquence correspondante de rang i (fi) dudit signal d'entrée (WDM),
- un multiplexeur (Mux) ayant au moins N+1 ports d'entrée et au moins deux ports de sortie, (O1, O2), quel que soit i compris entre 1 et N, le port d'entrée de rang i (Mi) dudit multiplexeur (Mux) est prévu pour adresser la fréquence de rang i (fi) dudit signal d'entrée (WDM) au premier port de sortie (O1) dudit multiplexeur et quel que soit i compris entre 2 et N+1, le port d'entrée de rang i (Mi) dudit multiplexeur (Mux) est prévu pour adresser la fréquence de rang i-1 (fi-1) dudit signal d'entrée (WDM) au second port de sortie (O2) dudit multiplexeur, et
- des moyens de commutation optique (A, B) pour connecter de façon sélective n'importe quel port de sortie de rang i (Di) dudit démultiplexeur (Demux), i étant compris entre 1 et N, soit au port d'entrée de rang i (Mi) dudit multiplexeur (Mux), soit au port d'entrée de rang i+1 (Mi+1) dudit multiplexeur (Mux).

2. Dispositif de multiplexage à insertion et extraction de fréquences reconfigurable **caractérisé en ce qu'**il comprend :
- un démultiplexeur (Demux') ayant au moins deux ports d'entrée (I1, I2) pour recevoir deux multiplex à répartition de fréquence constitué de N canaux (WDM1, WDM2) et au moins N+2 ports de sortie, quel que soit i compris entre 1 et N, le port de sortie de rang i (Di) dudit démultiplexeur (Demux') est prévu pour recevoir la fréquence correspondante de rang i (fi) du premier multiplex (WDM1) reçu sur le premier port d'entrée (I1) et quel que soit i compris entre 3 et N+2, le port de sortie rang i (Di) dudit démultiplexeur (Demux') est prévu pour recevoir la fréquence de rang i-2 (fi-2) du second multiplex (WDM2) reçu sur le second port d'entrée (I2),
- un multiplexeur (Mux') ayant au moins N+1 ports d'entrée et au moins deux ports de sortie (O1, O2), quel que soit i compris entre 1 et N, le port d'entrée de rang i (Mi) dudit multiplexeur (Mux) est prévu pour adresser la fréquence de rang i (fi) au premier port de sortie (O1) dudit multiplexeur et quelque soit i compris entre 2 et N+1, le port d'entrée de rang i (Mi) dudit multiplexeur (Mux) est prévu pour adresser la fréquence de rang i-1 (fi-1) au second port de sortie (O2) dudit multiplexeur,
- des moyens de commutation optique (C, A, B) pour connecter de façon sélective n'importe quel port de sortie de rang i Di dudit démultiplexeur (Demux'), avec i compris entre 3 et N, soit au port d'entrée de rang i-1 (Mi-1) dudit multiplexeur (Mux'), soit au port d'entrée de rang i (Mi-1) dudit multiplexeur (Mux'), soit au port d'entrée de rang i+1 (Mi+1) dudit multiplexeur (Mux'), les ports de sortie de rang 1 (D1) et de rang 2 (D2) dudit démultiplexeur (Demux') étant connectés chacun respectivement aux ports d'entrée de rang 1 (M1) et de rang 2 (M2) et aux ports d'entrée de rang 2 (M2) et de rang 3 (M3) dudit multiplexeur (Mux') et les ports de sortie de rang N+1 (DN+1) et N+2 (DN+2) dudit démultiplexeur (Demux') étant connectés chacun respectivement aux ports d'entrée de rang N (MN) et au port d'entrée de rang N+1 (MN+1) dudit multiplex Mux.

3. Dispositif selon la revendication 1 ou 2, **caractérisé en ce que** le démultiplexeur (Demux, Demux') et le multiplexeur (Mux, Mux') mis en oeuvre sont tous deux de type réseau à guides d'onde.

4. Dispositif selon la revendication 1, **caractérisé en ce que** les moyens de commutation optique (A, B) comprennent deux étages entrelacés d'interrupteurs optiques (A1, ..., AN et B1, ..., BN).

5. Dispositif selon la revendication 2, **caractérisé en ce que** les moyens de commutation optique (C, A, B) comprennent trois étages entrelacés d'interrupteurs optiques (C1, ..., CN, A1, ..., AN et B1, ..., BN).

6. Dispositif selon la revendication 4 ou 5, **caractérisé en ce que** les interrupteurs optiques utilisés sont de type amplificateurs optiques.
